# EUROPEAN PATENT APPLICATION

(11) **EP 3 195 720 A1**
(43) Date of publication of application: **26.07.2017**
(21) Application number: 16195715.4
(22) Date of filing: 26.10.2016
(51) Int. Cl.: A01D 41/127, G01F 23/284

(54) **CROP TANK SYSTEM**

(30) Priority: 21.01.2016 DE 102016100983
(71) Applicant: CLAAS E-Systems KGaA mbH & Co KG, 33330 Gütersloh (DE)
(72) Inventor: Ingibergsson, Johann, 2400 Copenhagen N.V. (DK); Blas, Morten Rufus, 2800 Kongens Lyngby (DK); Lundberg Lykkegaard, Kasper, 2300 København S (DK); Madsen, Ertbolle Madsen, Fremont, CA 94536 (US)
(74) Representative: Budach, Steffen

(57) **Abstract**

The invention is directed to a crop tank system with a crop tank (3) for receiving harvested crop (C) and with a fill level sensor arrangement (4) for detecting fill level information regarding the crop tank (3). It is proposed, that the fill level sensor arrangement (4) comprises a radar sensor (5), which is sending out and receiving radar rays (6,7), which radar rays (6,7), depending on the fill level (8) of the crop (C) contained in the crop tank (3), are penetrating the crop (C) contained in the crop tank (3) and/or are reflected by the crop (C) contained in the crop tank (3) and that the fill level sensor arrangement (4) comprises an electronic sensor control (9) which determines the fill level information based on the received radar rays (7).

## Description

The invention is directed to a crop tank system with the features of the general portion of claim 1, to an agricultural machine with such a crop tank system according to claim 7 and to a method for conducting agricultural working processes according to claim 13.

Exact information about the performance of an agricultural machine such as a combine harvester is of particular importance for finding the optimized settings of its working organs. In this sense one important information to be obtained is the fill level and/or the fill rate of the crop tank system, which is assigned to the agricultural machine. For this, the crop tank system in question is provided with a fill level sensor arrangement.

The known crop tank system (DE 103 45 612 A1), which is the starting point for the present invention, comprises a crop tank for receiving harvested crop and a fill level sensor arrangement for detecting fill level information of the crop tank. The fill level sensor arrangement comprises a weighing sensor which allows the determination of the weight of the crop, which is contained in the crop tank. Although it is possible to achieve a high accuracy in the measurement, the constructional effort and the resulting costs are comparably high.

It is therefore the object of the present invention to improve the known crop tank system such that the desired fill level information may be obtained with low constructional effort and low costs.

The above noted subject is solved for a crop tank system according to the general part of claim 1 by the features of the characterizing part of claim 1.

It has been found by the invention that radar sensors are generally suitable for determining fill level information of the crop tank. According to the invention, the fill level arrangement therefore comprises a radar sensor, which is sending out and receiving radar rays. The proposed arrangement is such that the radar rays, depending on the fill level of the crop contained in the crop tank, are penetrating the crop contained in the crop tank and/or are reflected by the crop contained in the crop tank. This means that the radar rays, which are being received by the radar sensor, allow the determination of the fill level information. For this determination of the fill level information based on the received radar rays, the fill level sensor arrangement comprises an electronic sensor control, which may well be part of a central control of the agricultural machine such as a driver assistance system.

With the proposed crop tank system, a fill level information may be obtained in a contact-free manner using a radar sensor, which may be realized with low costs.

The fill level information may include a number of aspects related to the fill level of the crop contained in the crop tank. Preferably, the fill level information includes the fill level as such and/or the filling rate of the crop tank (claim 2).

It may be pointed out that the proposed solution is not restricted to the sensor arrangement comprising only one single sensor. It may well be advantageous to provide the fill level sensor arrangement with more than one sensor, in particular with more than one radar sensor. In this context it is also possible to provide the fill level sensor arrangement with a combination of one radar sensor or more radar sensors and at least another sensor of a different sensor principle.

Claims 4 and 5 are directed to preferred locations of the radar sensor of the fill level sensor arrangement. According to claim 4, the radar sensor is located in the area of the top of the crop tank, such that the radar sensor operates from outside the crop. This is advantageous as the determination of the fill level may be obtained by the determination of the location of the surface of the crop contained in the crop tank. According to claim 5, however, the radar sensor operates from within the crop, which allows to place the radar sensor such that it is no obstacle for other components of the agricultural machines such as a discharge trunk or the like.

A second teaching according to claim 8, which is of independent importance, is directed to an agricultural machine, in particular a combine harvester. The proposed agricultural machine serves for conducting an agricultural working process and is provided with a driver assistance system and with a crop tank system according to the first teaching. The driver assistance system data-processes the obtained fill level information for the running agricultural working process. As the proposed use of a radar sensor allows not only to obtain the fill level of the crop tank, but also other information such as crop moisture or the like, the data-processing of the obtained fill level information by the driver assistance system has a certain potential for the improvement of the agricultural working process altogether. This is particularly true for the preferred embodiment according to claim 9, which is directed to the driver assistance system data-processing the obtained fill level information by controlling at least one working organ of the agricultural machine based on the fill level information.

In addition or alternatively, according to claim 10, it is proposed to store the obtained fill level information after a step of georeferencing in a local memory or a data base such that the fill level information may be relied on by subsequent agricultural working processes. This offline-approach may well be combined with the above noted online-approach in order to achieve best results in terms of efficiency. This aspect is particularly interesting for the fill rate being included in the fill level information.

Claims 11 and 12 are directed to possible reactions of the driver assistance system on certain fill level information. According to claim 11 the adjustable chassis is being adjusted according to the obtained fill level information. This is advantageous in view of the fact that with increasing fill level the weight on the chassis of the agricultural machine increases. In order to prevent the increasing weight of the crop lowering the agricultural machine as such it is proposed to have the adjustment of the chassis counteract the increasing weight of the crop. In a similar fashion it is proposed according to claim 12 to adjust the air pressure of the tires of the agricultural machine, depending on the fill level information, in particular depending on the obtained fill level of the crop tank.

A third teaching according to claim 13, which is of independent importance as well, is directed to a method for conducting agricultural working processes with agricultural machines according to the second teaching.

According to the proposed method, within a running agricultural working process, a fill level information of the crop tank is being obtained, wherein the obtained fill level information is being data-processed for the running agricultural process and/or for subsequent working processes. Just as the first teaching, the fill level information is being obtained within a running agricultural process, using the above noted, proposed radar sensor. Due to the above noted fact, that the radar sensor may obtain not only the fill level, but different other quantities, this approach may be the basis for the improvement of the running agricultural working process, but also for the improvement of parallel and/or subsequent agricultural working processes.

Further details, features, goals and advantages of the present invention shall be described in the following based on the illustration of a preferred embodiment. In the illustration, the figure shows the following:
- Fig. 1: a schematic diagram of a proposed agricultural machine with a proposed crop tank system, each being suitable for conducting a harvesting process according to the proposed method and
- Fig. 2: a schematic diagram of another proposed agricultural machine with a proposed crop tank system, each being suitable for conduct-ing a harvesting process according to the proposed method.

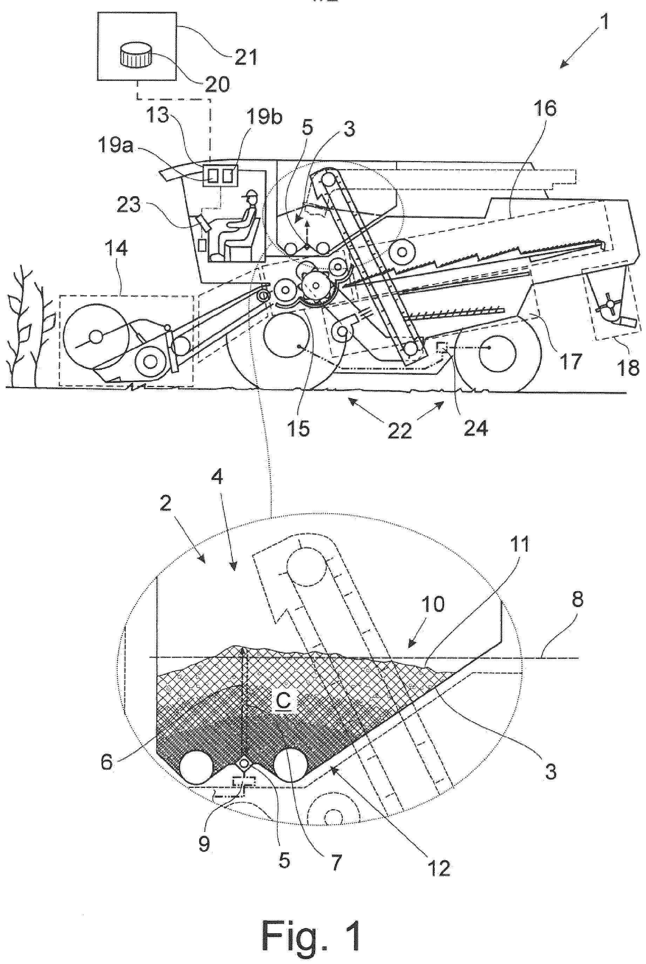

The agricultural machine 1 shown in Fig. 1 is designed as a combine as will be explained later. However, the proposed solution may be applied to any agricultural machine. For example, the agricultural machine may be a tractor, a trailer, or the like.

The drawings show two embodiments of a proposed agricultural machine 1, which is provided with a respective crop tank system 2. The crop tank system 2 comprises a crop tank 3 for receiving harvested crop C and a fill level sensor arrangement 4 for detecting fill level information regarding the crop tank 3. Preferably, the fill level information includes at least the fill level of the crop tank 3.

It is of particular importance that the fill level sensor arrangement 4 comprises a radar sensor 5 which is sending out and receiving radar rays 6, 7. The working principle of such a radar sensor 5 as such is well known.

Depending on the fill level 8 of the crop C contained in the crop tank 3, the radar rays 6 are penetrating the crop C contained in the crop tank 3 and/or are reflected by the crop C contained in the crop tank 3. The degree of penetration and reflection and dampening of the radar rays 6,7 depend on the crop, in particular the crop condition such as crop moisture.

The fill level sensor arrangement 4 comprises an electronic sensor control 9 which determines the fill level information based on the received radar rays 7.

The fill level information can include various quantities, that are directed to different aspects of the crop tank 3 respective the crop C contained in the crop tank 3. As noted above, preferably, the fill level information at least includes the fill level 8 of the crop tank 3. As an alternative or in addition the fill level information includes the fill rate of the crop tank 3. The fill rate, here and preferably, is the change of fill level per unit in time.

The fill level information may also include quantities regarding aspects of the crop tank 3, which are not directly connected to the fill level 8. Accordingly, the fill level information may include a crop condition such as crop moisture.

In the preferred embodiment shown in Fig. 1, the radar sensor 5 is located in the area of the top 10 of the crop tank 3. Here and preferably, the radar sensor 5 shown in Fig. 1 is always free of the crop C contained in the crop tank 3. The radar sensor 5 is sending out radar rays 6 into the direction of the surface 11 of the crop C contained in the crop tank 3. The sensor control 9 preferably evaluates a value for the time needed for the radar ray 6, 7 to be reflected from the surface 11, which represents the distance between the radar sensor 5 and the point of reflection at the surface 11. This time may well be derived from a phase shift in the sent rays 6 versus the received rays 7.

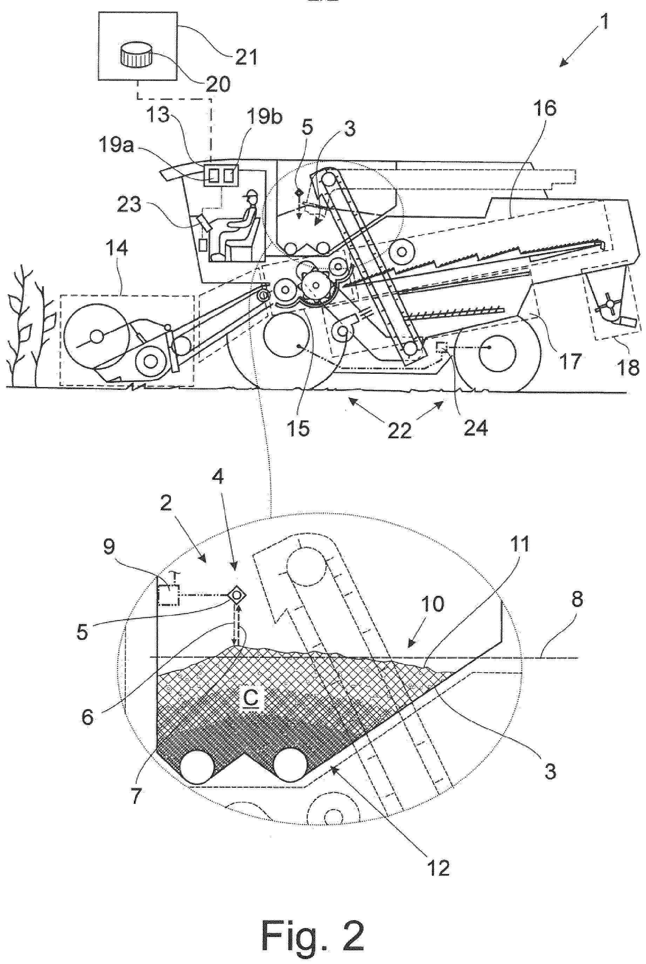

In the preferred embodiment as shown in Fig. 2 the radar sensor 5 is located in the area of the bottom 12 of the crop tank 3 and is sending out radar rays 6 into the direction of the surface 11 of the crop C contained in the crop tank 3 as well. Here and preferably, the radar sensor 5 is located within the crop C contained in the crop tank 3. In both embodiments shown in the drawings, for determining the fill level information, the sensor control 9 locates the surface 11 of the crop C contained in the crop tank 3 based on the received radar rays 7.

It is preferred, that sensor control 9 evaluates a value for the time needed for the radar ray 6, 7 to be reflected, which represents the distance between the radar sensor 5 and the point of reflection as noted above. With the radar sensor 5 being located in the area of the bottom 12 of the crop tank 3, the highest distance value may be a value for the fill level of the crop tank 3.

Alternatively or in addition, in the embodiment shown in Fig. 2, the sensor control 9 evaluates the portion of the sent radar rays 6, which is not being reflected back to the radar sensor 5. The idea behind this is the fact that depending on the fill level 8 of the crop C contained in the crop tank 3 a different portion of the sent radar rays 6 are completely passing through the crop C contained in the crop tank 3, not being reflected to the radar sensor 5. Accordingly, based on the portion of the sent radar rays 6, which is not being reflected to the radar sensor 5, a value for the fill level of the crop tank 3 may be determined. Alternatively or in addition it may be foreseen that the sensor control 9 evaluates the dampening of the received radar rays 7 with respect to the sent radar rays 6, in order to obtain the respective fill level information.

For the radar sensor 5 a measuring frequency between 0,1 GHz and 1 GHz has been proven to provide good and reproducible measurement results.

Depending on the measurement conditions, in particular depending on the crop conditions, the obtained fill level information may vary. This at least in some cases makes it necessary to run a calibration process before reliable fill level information is available. In the easiest case, during the calibration process, the crop tank 3 of the crop tank system 2 is being filled manually by 100 %. After this has been done, the fill level sensor arrangement 4 runs a measurement, which measurement should show a fill level 8 of 100 % accordingly. If this is not the case, a correction value will be derived from the measured fill level and the actual fill level 8. All following measured fill levels will be corrected by this correction value.

According to a second teaching, the agricultural machine 1 as such as being claimed, which agricultural machine 1, here and preferably, is a combine. The agricultural machine 1 serves for conducting an agricultural working process and is provided with a driver assistance system 13 as well as with a proposed crop tank system 2. All explanations given regarding the proposed crop tank system 2 are fully applicable to this second teaching.

The driver assistance system 13 data-processes the obtained fill level information for the running agricultural working process. It is also possible that the obtained fill level information will be used for parallel agricultural working processes and/or subsequent agricultural working processes, as will be explained later.

Preferably, the agricultural machine 1 is a self-propelled harvesting machine, in particular a combine as noted above. The agricultural machine 1 comprises at least one working organ 14-18, wherein, here and preferably, the driver assistance system 13 serves for the control of at least one working organ 14-18. In the shown and insofar preferred embodiments, the agricultural machine 1 comprises a number of working organs 14-18, for example a front attachment 14, a threshing unit 15, a separating unit 16, a cleaning unit 17 and a distribution unit 18. Other working organs, not shown in the drawings, are a traction drive, a steering drive, or the like.

Here and preferably, within the agricultural working process, the driver assistance system 13 data-processes the obtained fill level information by controlling at least one working organ 14-18 of the agricultural machine 1 based on the fill level information, which has been obtained in the running agricultural working process or a previous agricultural working process.

One example for this is the driver assistance system 13 following predefined operational strategies such as maximizing the crop output of the agricultural machine 1. Here, the driver assistance system 13 evaluates the obtained fill rate and controls the traction drive as well as the threshing unit 15 in order to comply with the operational strategy. Accordingly, the obtained fill level information is an integral part of a respective control loop of the agricultural machine 1.

Another example for data-processing the obtained fill level information may be the organization of tractor-pulled trailers, which serve to transport the harvested crop from the field. Here, the agricultural machine 1, depending on the fill level information, may send a request to an organizational network in order to have a trailer arrive at the field such that the crop C contained in the crop tank 3 may be transferred to the respective trailer.

The obtained fill level information is preferably used for mapping of a field, which means that the obtained field information, preferably the fill rate, is stored in a data base 20 such that this information may be retrieved whenever an agricultural working process is to be conducted on this respective field. For this, here and preferably, the driver assistance system 13 data-processes the obtained fill level information by georeferencing the obtained fill level information. This means, that the driver assistance system 13 assigns each fill level information to the respective position information. Preferably, for obtaining the position information, the driver assistance system 13 comprises a positioning system, preferably a GPS-based positioning system. The georeferenced fill level information is being stored in memory 19a of the driver assistance system 13, which also is provided with a processing unit 19b to data-process the data contained in the memory 19a.

Alternatively or in addition the georeferenced fill level information is being transmitted to a data base 20 by the driver assistance system 13. Here and preferably, the data base 20 is located on a data server 21, which is remote from the agricultural machine 1. The data server 21 may be a central server which administrates numerous data bases 20 representing the respective field information.

One advantage of storing the obtained fill level information in a data base 20 is the availability of the obtained fill level information for all subsequent agricultural working processes. Further it may be possible to establish a complete history of the obtained information such that trends in changes of the fill level information, in particular of the fill rate, may be detected. Those trends may trigger certain measures to counteract the detected trend.

Another possibility for the driver assistance system 13 to data-process the obtained fill level information goes back on the agricultural machine 1 preferably comprising an adjustable chassis 22 with wheels 25 - 28, wherein the driver assistance system 13, based on the obtained fill level information, adjusts the chassis 22 or proposes to the user such adjustment via a man-machine-interface 23. With this it is possible to prevent the agricultural machine 1 from lowering due to an increase of weight, that goes along with the increase of fill level 8.

In the preferred case that the agricultural machine 1 comprises at least two above noted wheels with tires and that the agricultural machine 1 comprises an air pressure unit 24, which air pressure unit 24 may be controlled to change the air pressure of the tires assigned to the wheels, the driver assistance system 13, based on the obtained fill level information, preferably adjusts the air pressure of the tires or proposes to the user such adjustment via the above man-machine-interface 23. The adjustment of the air pressure of the tires may be done based on the above noted fill level information. By adjusting the air pressure of the tires it is generally possible to restrict the pressure exerted from the tires onto the ground, even if the weight of the agricultural machine 1 increases due to an increase in fill level 8.

According to another teaching, a method for conducting agricultural working processes with agricultural machines 1 as disclosed above is claimed.

It is essential for this second teaching, that within a running agricultural working process a fill level information regarding the crop tank 3 is being obtained and that the obtained fill level information is being data-processed for the running agricultural working process and/or for subsequent working processes.

The basic principle of using the obtained fill level information for conducting the agricultural working process is similar to the operation of the agricultural machine according to the second teaching. However, it may be pointed out that according to the proposed method, the subsequent working processes may be conducted by any agricultural machine 1, which may or may not be designed according to the second invention. Other than that all explanations given for the operation of the agricultural machine 1 according to the second teaching are fully applicable to the third teaching.

An example for the proposed method is a combine conducting the harvesting process and at the same time obtaining the fill level information via the proposed fill level sensor arrangement 4. As noted with respect to the proposed agricultural machine 1, this fill level information is taken into account by the driver assistance system 13 for controlling the working organs 14-18. As, preferably, the obtained fill level information is being georeferenced and is either being stored in a local memory 19a or being transmitted to a data base 20, this fill level information may be used by subsequent agricultural working processes. As a result, it is preferred that the fill level information, which is obtained within the running agricultural process, is the basis for the operation of the agricultural machine 1 or another agricultural machine within in a subsequent agricultural working process. With the use of the fill level information not only for the running agricultural working process, but possibly also for a subsequent agricultural working process, a double use of the fill level information is resulting, which as such leads to an increase in efficiency.

### Reference sign list

- 1: agricultural machine
- 2: crop tank system
- 3: crop tank
- 4: fill level sensor arrangement
- 5: radar sensor
- 6: sent radar rays
- 7: received radar rays
- 8: fill level
- C: crop
- 9: electronic sensor control
- 10: top area of crop tank
- 11: surface
- 12: bottom area of crop tank
- 13: driver assistance system
- 14-18: working organs
- 14: front attachment
- 15: threshing unit
- 16: separating unit
- 17: cleaning unit
- 18: distribution unit
- 19a: memory
- 19b: processing unit
- 20: data base
- 21: data server
- 22: chassis
- 23: man-machine-interface
- 24: air pressure unit

## Claims

1. Crop tank system with a crop tank (3) for receiving harvested crop (C) and with a fill level sensor arrangement (4) for detecting fill level information regarding the crop tank (3),
**characterized in**
**that** the fill level sensor arrangement (4) comprises a radar sensor (5), which is sending out and receiving radar rays (6,7), which radar rays (6,7), depending on the fill level (8) of the crop (C) contained in the crop tank (3), are penetrating the crop (C) contained in the crop tank (3) and/or are reflected by the crop (C) contained in the crop tank (3) and that the fill level sensor arrangement (4) comprises an electronic sensor control (9) which determines the fill level information based on the received radar rays (7).

2. Crop tank system according to claim 1, **characterized in that** the fill level information includes the fill level (8) and/or the fill rate of the crop tank (3).

3. Crop tank system according to claim 1 or 2, **characterized in that** the fill level information includes a crop condition such as crop moisture.

4. Crop tank system according to any one of the preceding claims, **characterized in that** the radar sensor (5) is located in the area of the top (10) of the crop tank (3) and is sending out radar rays (6) into the direction of the surface (11) of the crop (C) contained in the crop tank (3).

5. Crop tank system according to any one of the preceding claims, **characterized in that** the radar sensor (5) is located in the area of the bottom (12) of the crop tank (3) and is sending out radar rays (6) into the direction of the surface (11) of the crop (C) contained in the crop tank (3).

6. Crop tank system according to any one of the preceding claims, **characterized in that** for determining the fill level information, the sensor control (9) locates the surface (11) of the crop (C) contained in the crop tank (3) based on the received radar rays (7).

7. Crop tank system according to any one of the preceding claims, **characterized in that** for determining the fill level information, the sensor control (9) evaluates the portion of the sent radar rays (6), which is not being reflected to the radar sensor (5), and/or, that the sensor control (9) evaluates the dampening of the received radar rays (7) with respect to the sent radar rays (6).

8. Agricultural machine, in particular combine, for conducting an agricultural working process with a driver assistance system (13) and with a crop tank system (2) according to any one of the preceding claims, wherein the driver assistance system (13) data-processes the obtained fill level information for the running agricultural working process.

9. Agricultural machine according to claim 8, **characterized in that** the driver assistance system (13), within the agricultural working process, data-processes the obtained fill level information by controlling at least one working organ (14-18) of the agricultural machine (1) based on the fill level information, which has been obtained in the running agricultural working process or a previous agricultural working process.

10. Agricultural machine according to claim 8 or 9, **characterized in that** the driver assistance system (13) data-processes the obtained fill level information by georeferencing the obtained fill level information and storing the georeferenced fill level information in a local memory (19a) or transmitting the georeferenced fill level information to a database (20), in particular to a database (20) on a data server (21), which is remote from the agricultural machine (1).

11. Agricultural machine according to any one of the claims 8 to 10, **characterized in that** the agricultural machine (1) comprises an adjustable chassis (22) with wheels and that the driver assistance system (13), based on the obtained fill level information, adjusts the chassis (22) or proposes to the user such adjustment via a man-machine-interface (23).

12. Agricultural machine according to any one of the claims 8 to 11, **characterized in that** the agricultural machine (1) comprises at least two wheels (25-28) with tires and an air pressure unit (24), which air pressure unit (24) may be controlled to change the air pressure of the tires, and that the driver assistance system (13), based on the obtained fill level information, adjusts the air pressure of the tires or proposes to the user such adjustment via a man-machine-interface (23).

13. Method for conducting agricultural working processes with agricultural machines (1) according to one of the claims 8 to 12, wherein within a running agricultural working process a fill level information regarding the crop tank (3) is being obtained and wherein the obtained fill level information is being data-processed for the running agricultural working process and/or for subsequent working processes.

14. Method according to claim 13, **characterized in that** the obtained fill level information is being georeferenced and is being stored in a local memory (19a) or transmitted to a database, in particular to a database (20) on a data server (21), which is remote from the agricultural machine (1).

15. Method according to claim 13 or 14, **characterized in that** the fill level information, which is obtained within the running agricultural working process, is the basis for the operation of the agricultural machine (1) or another agricultural machine within in a subsequent agricultural working process.
